# EUROPEAN PATENT APPLICATION

(11) **EP 4 503 761 A1**
(43) Date of publication of application: **05.02.2025**
(21) Application number: 22934138.3
(22) Date of filing: 30.03.2022
(51) Int. Cl.: H04W 52/02

(54) **METHODS AND APPARATUSES FOR CONFIGURING UPLINK POSITIONING REFERENCE SIGNAL, AND DEVICES AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/084227
(87) International publication number: WO 2023/184288

(57) **Abstract**

The present application relates to the field of mobile communications. Disclosed are methods and apparatuses for configuring an uplink positioning reference signal, and devices and a storage medium. A method comprises: sending a first message to a first network device, wherein the first message comprises an uplink positioning reference signal configuration, and the first message is used for requesting the first network device to reserve the uplink positioning reference signal configuration. A first network device is instructed to reserve an uplink positioning reference signal configuration, such that a terminal device that sends an uplink positioning reference signal using the uplink positioning reference signal configuration can still continue using the uplink positioning reference signal configuration when performing reselection to a cell of the first network device, and frequent information exchange with the network device is avoided, thereby achieving a reduction in positioning latency and a reduction in power consumption of the terminal device.

## Description

### FIELD

The present invention relates to the field of mobile communications, and in particular to a method, apparatus and device for configuring a reference signal, and a storage medium.

### BACKGROUND

A variety of positioning techniques are introduced in the 5th generation mobile communication technology (5G) new radio (NR) to position terminals.

For the uplink positioning technique and the uplink-downlink combined positioning technique, a network device needs to configure an uplink positioning reference signal for a terminal, so that the terminal sends the uplink positioning reference signal to the network device according to the uplink positioning reference signal configuration, thereby realizing the positioning of the terminal.

Regarding the manner for configuring the uplink positioning reference signal to the terminal, further discussion and research are needed.

### SUMMARY

Embodiments of the present invention provide a method, apparatus and device for configuring an uplink positioning reference signal, and a storage medium. The technical solutions are as follows.

According to an aspect of the present invention, there is provided a method for configuring an uplink positioning reference signal. The method is performed by a location management function (LMF) network element, and includes: sending a first message to a first network device. The first message includes an uplink positioning reference signal configuration, and the first message is configured to request the first network device to reserve the uplink positioning reference signal configuration.

According to another aspect of the present invention, there is provided a method for configuring an uplink positioning reference signal. The method is performed by a first network device, and includes: receiving a first message sent by an LMF network element. The first message includes an uplink positioning reference signal configuration, and the first message is configured to request the first network device to reserve the uplink positioning reference signal configuration.

According to another aspect of the present invention, there is provided a method for configuring an uplink positioning reference signal. The method is performed by a second network device, and includes: receiving information of a first network device sent by an LMF network element; and sending the information of the first network device to a terminal. The first network device is a network device that reserves an uplink positioning reference signal configuration, and the uplink positioning reference signal configuration is configured to configure the uplink positioning reference signal for the terminal through the second network device.

According to another aspect of the present invention, there is provided a method for configuring an uplink positioning reference signal. The method is performed by a terminal, and includes: receiving information of a first network device sent by a second network device. The first network device is a network device that reserves an uplink positioning reference signal configuration, and the uplink positioning reference signal configuration is configured to configure the uplink positioning reference signal for the terminal through the second network device.

According to another aspect of the present invention, there is provided an apparatus for configuring an uplink positioning reference signal. The apparatus includes: a sending module configured to send a first message to a first network device. The first message includes an uplink positioning reference signal configuration, and the first message is configured to request the first network device to reserve the uplink positioning reference signal configuration.

According to another aspect of the present invention, there is provided an apparatus for configuring an uplink positioning reference signal. The apparatus includes: a receiving module configured to receive a first message sent by an LMF network element. The first message includes an uplink positioning reference signal configuration, and the first message is configured to request the first network device to reserve the uplink positioning reference signal configuration.

According to another aspect of the present invention, there is provided an apparatus for configuring an uplink positioning reference signal. The apparatus includes: a receiving module configured to receive information of a first network device sent by an LMF network element; and a sending module configured to the information of the first network device to a terminal. The first network device is a network device that reserves an uplink positioning reference signal configuration, and the uplink positioning reference signal configuration is configured to configure the uplink positioning reference signal for the terminal through the second network device.

According to another aspect of the present invention, there is provided an apparatus for configuring an uplink positioning reference signal. The apparatus includes: a receiving module configured to receive information of a first network device sent by a second network device. The first network device is a network device that reserves an uplink positioning reference signal configuration, and the uplink positioning reference signal configuration is configured to configure the uplink positioning reference signal for the terminal through the second network device.

According to another aspect of the present invention, there is provided a terminal. The terminal includes: a processor; a transceiver connected to the processor; and a memory configured to store instructions executable by the processor, and the processor is configured to load and execute the executable instructions to perform the method for configuring the uplink positioning reference signal as described in the above aspects.

According to another aspect of the present invention, there is provided a network device. The network device includes: a processor; a transceiver connected to the processor; and a memory configured to store instructions executable by the processor, and the processor is configured to load and execute the executable instructions to perform the method for configuring the uplink positioning reference signal as described in the above aspects.

According to another aspect of the present invention, there is provided a computer-readable storage medium having stored therein executable instructions that, when loaded and executed by a processor, cause the method for configuring the uplink positioning reference signal as described in the above aspects to be implemented.

According to another aspect of the present invention, there is provided a chip, which includes a programmable logic circuit and/or a program instruction. The chip, when run on a computer equipment, causes the method for configuring the uplink positioning reference signal as described in the above aspects to be implemented.

According to another aspect of the present invention, there is provided a computer program product or a computer program. The computer program product or the computer program includes computer instructions, the computer instructions are stored in a computer-readable storage medium, and a processor reads the computer instructions from the computer-readable storage medium and executes the computer instruction to cause a computer equipment to execute the method for configuring the uplink positioning reference signal as described in the above aspects.

The technical solution provided in present invention at least includes the following beneficial effects.

The first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the first network device, which avoids frequent information interaction with the network device, and reduces the positioning delay and the power consumption of the terminal.

### BRIEF DESCRIPTION OF THE DRAWINGS

In order to illustrate the technical solutions in embodiments of the present invention more clearly, drawings to be used in the description of embodiments of the present invention will be briefly introduced below. Apparently, the drawings in the following description only involve some embodiments of the present invention, and other drawings may also be obtained by those of ordinary skill in the art on the basis of these drawings without creative efforts.
FIG. 1 is a schematic system architecture diagram of a communication system according to an example embodiment of the present invention;
FIG. 2 is a schematic flowchart of a method for configuring an uplink positioning reference signal according to an example embodiment of the present invention;
FIG. 3 is a schematic flowchart of a method for configuring an uplink positioning reference signal according to an example embodiment of the present invention;
FIG. 4 is a schematic flowchart of a method for configuring an uplink positioning reference signal according to an example embodiment of the present invention;
FIG. 5 is a schematic flowchart of a method for configuring an uplink positioning reference signal according to an example embodiment of the present invention;
FIG. 6 is a schematic flowchart of a method for configuring an uplink positioning reference signal according to an example embodiment of the present invention;
FIG. 7 is a schematic flowchart of a method for configuring an uplink positioning reference signal according to an example embodiment of the present invention;
FIG. 8 is a schematic flowchart of a method for configuring an uplink positioning reference signal according to an example embodiment of the present invention;
FIG. 9 is a schematic flowchart of a method for configuring an uplink positioning reference signal according to an example embodiment of the present invention;
FIG. 10 is a schematic flowchart of a method for configuring an uplink positioning reference signal according to an example embodiment of the present invention;
FIG. 11 is a schematic flowchart of a method for configuring an uplink positioning reference signal according to an example embodiment of the present invention;
FIG. 12 is a schematic flowchart of a method for configuring an uplink positioning reference signal according to an example embodiment of the present invention;
FIG. 13 is a schematic flowchart of a method for configuring an uplink positioning reference signal according to an example embodiment of the present invention;
FIG. 14 is a schematic flowchart of a method for configuring an uplink positioning reference signal according to an example embodiment of the present invention;
FIG. 15 is a schematic flowchart of a method for configuring an uplink positioning reference signal according to an example embodiment of the present invention;
FIG. 16 is a schematic diagram showing cells according to an example embodiment of the present invention;
FIG. 17 is a schematic block diagram of an apparatus for configuring an uplink positioning reference signal according to an example embodiment of the present invention;
FIG. 18 is a schematic block diagram of an apparatus for configuring an uplink positioning reference signal according to an example embodiment of the present invention;
FIG. 19 is a schematic block diagram of an apparatus for configuring an uplink positioning reference signal according to an example embodiment of the present invention;
FIG. 20 is a schematic block diagram of an apparatus for configuring an uplink positioning reference signal according to an example embodiment of the present invention; and
FIG. 21 is a schematic block diagram of a communication device according to an example embodiment of the present invention.

### DETAILED DESCRIPTION

In order to make the objects, technical solutions and advantages of the present invention clearer, embodiments of the present invention will be further described in detail below with reference to the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of the present invention as recited in the appended claims.

Terms used in embodiments of the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. Depending on the context, the term "if" as used herein may be construed to mean "when" or "upon" or "when it is determined".

A variety of positioning techniques are introduced in the 5th generation mobile communication technology (5G) new radio (NR) to position terminals. For the uplink positioning technique and the uplink-downlink combined positioning technique, an uplink positioning reference signal sent by the terminal to the network device needs to be used to position the terminal. The uplink positioning reference signal is a sounding reference signal (SRS). The network device needs to first configure the uplink positioning reference signal for the terminal before it can receive the uplink positioning reference signal sent by the terminal. By sending an uplink positioning reference signal configuration to the terminal, the network device can configure the uplink positioning reference signal for the terminal. The uplink positioning reference signal configuration includes a time-frequency resource to be used by the terminal when sending the uplink positioning reference signal.

In NR of Release 16 (R16), the following methods for positioning a terminal based on the SRS are introduced:
- enhanced cell identifier document (ID) positioning method;
- uplink time difference of arrival positioning method;
- multi-round-trip time positioning method;
- uplink angle of arrival positioning method.

In the above methods, the uplink positioning reference signal needs to be used. In R16, when a terminal is positioned through the above method, the terminal needs to be in a radio resource control (RRC) connected state, which will result in high power consumption of the terminal.

In NR of R17, positioning of a terminal in an RRC inactive state is supported. When the terminal is in the RRC inactive state, it is able to send the uplink positioning reference signal to the network device. Specifically, when the network device switches the terminal from the RRC connected state to the RRC inactive state, it will configure the uplink positioning reference signal for the terminal via an RRC release message. Detailed configuration corresponding to the uplink positioning reference signal is included in a sounding reference signal positioning radio resource control inactive configuration (srs-PosRRC-InactiveConfig) of the RRC release message, and in the case where the terminal performs a cell reselection, the terminal needs to release the uplink positioning reference signal configured therefor by the network device, i.e., to release the uplink positioning reference signal configuration. For example, after the cell reselection, the terminal will delete the locally saved uplink positioning reference signal configuration.

Because the terminal in the RRC inactive state will release the uplink positioning reference signal configured therefor by the network device when the cell reselection occurs, the uplink positioning reference signal needs to be reconfigured for the terminal. At this time, the terminal will interact with the network device to obtain the uplink positioning reference signal configuration. In the above situation, if the terminal moves quickly (such as an Internet of Vehicle (IoV) device), the terminal may frequently perform the cell reselection, resulting in frequent interactions between the terminal and the network device to obtain the uplink positioning reference signal configuration, which will increase the power consumption of the terminal.

In the related art, a location management function (LMF) network element requests a service network device (a base station) corresponding to a terminal to configure an uplink positioning reference signal for the terminal, and only when the terminal accesses a network device that configures the uplink positioning reference signal for the terminal, does the terminal can use the uplink positioning reference signal configuration sent by the network device. When cell reselection occurs, the uplink positioning reference signal configured for the terminal becomes invalid. As a result, the terminal needs to obtain the uplink positioning reference signal configuration again, which increases the positioning delay and the power consumption of the terminal.

With the method according to embodiments of the present invention, the LMF network element can instruct the network device to reserve the uplink positioning reference signal configuration, so that the terminal using the uplink positioning reference signal configuration to send the uplink positioning reference signal can continue to use the uplink positioning reference signal configuration when the terminal reselects and accesses the network device, which avoids frequent information interaction with the network device, and reduces the positioning delay and the power consumption of the terminal.

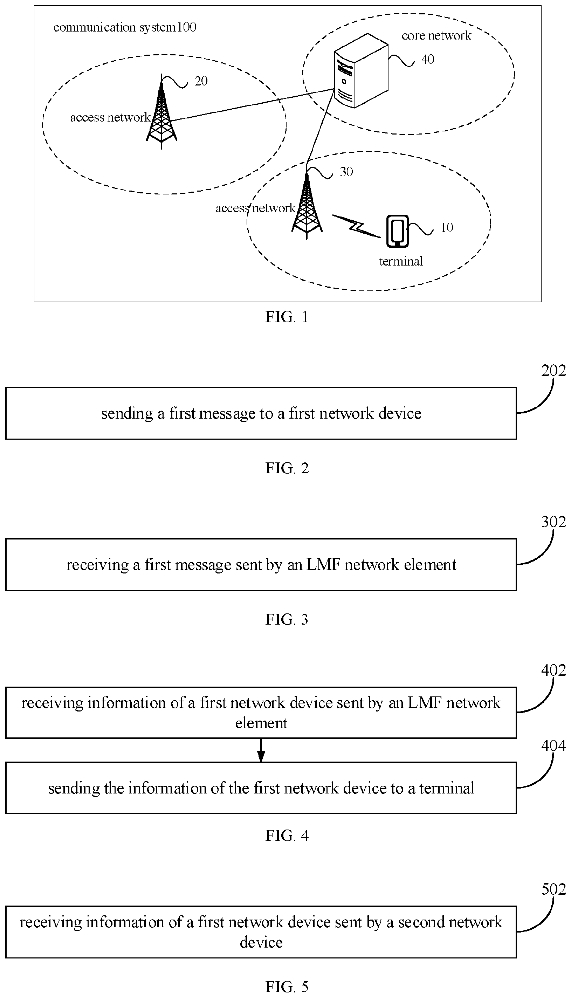

FIG. 1 shows a schematic system architecture diagram of a communication system according to an embodiment of the present invention. The system architecture may include: a terminal 10, a first access network device 20, a second access network device 30, and a core network device 40.

The terminal 10 may refer to a user equipment (UE), an access terminal, a subscriber unit, a user station, a mobile station, a mobile, a remote station, a remote terminal, a mobile equipment, a wireless communication device, a user agent or a user device. Optionally, the terminal may also be a cellular phone, a cordless phone, a session initiation protocol (SIP) phone, a wireless local loop (WLL) station, a personal digital assistant (PDA), a handheld device with a wireless communication function, a computing device or other processing devices connected to a wireless modem, a vehicle-mounted device, a wearable device, a terminal in a 5th generation (5GS) mobile communication system, a terminal in a future evolved public land mobile network (PLMN), or the like, which is not limited in embodiments of the present invention. For convenience of description, the devices mentioned above are collectively referred to as terminals. Usually, there are a plurality of terminals 10, and one or more terminals 10 may be distributed in a cell managed by an access network device 20.

The first access network device 20 is a device deployed in the access network to provide the wireless communication function for the terminal 10. The first access network device 20 may include various forms of macro base stations, micro base stations, relay stations, access points, etc. In systems using different wireless access techniques, the names of devices with the function of the first access network device may be different. For example, in a 5G NR system, they are called gNodeB or gNB. With the evolution of the communication technology, the name of the "first access network device" may change. For convenience of description, in embodiments of the present invention, the above devices that provide the wireless communication function for the terminal 10 are collectively referred to as first access network devices. Optionally, through the first access network device 20, a communication relationship may be established between the terminal 10 and the core network device 30. For example, in an LTE system, the first access network device 20 may be an evolved universal terrestrial radio access network (EUTRAN) or one or more eNodeBs in the EUTRAN; in a 5G NR system, the first access network device 20 may be an RAN or one or more gNBs in the RAN.

The second access network device 30 is a device deployed in the access network to provide the wireless communication function for the terminal 10. The second access network device 30 may include various forms of macro base stations, micro base stations, relay stations, access points, etc. In systems using different wireless access techniques, the names of devices with the function of the second access network device may be different. For example, in a 5G NR system, they are called gNodeB or gNB. With the evolution of the communication technology, the name of the "second access network device" may change. For convenience of description, in embodiments of the present invention, the above devices that provide the wireless communication function for the terminal 10 are collectively referred to as second access network devices. Optionally, through the second access network device 30, a communication relationship may be established between the terminal 10 and the core network device 30. For example, in an LTE system, the second access network device 30 may be an evolved universal terrestrial radio access network (EUTRAN) or one or more eNodeBs in the EUTRAN; in a 5G NR system, the second access network device 30 may be an RAN or one or more gNBs in the RAN.

The functions of the core network device 40 are mainly to provide user connection, user management and service carrying, and serve as a carrier network to provide an interface to an external network. For example, the core network device in the 5G NR system may include an access and mobility management function (AMF) entity, a user plane function (UPF) entity, a session management function (SMF) entity, a location management function (LMF) entity, and other devices. The access network device 20 and the core network device 40 may be collectively referred to as network devices. In embodiments of the present invention, explanations are made with reference to examples where the core network device 40 is the LMF network element.

In an example, the first access network device 20 and the second access network device 30 communicate with the core network device 30 through a certain over-the-air technique, such as an NG interface in the 5G NR system. The first access network device 20 and the second access network device 30 communicate with the terminal 10 through a certain over-the-air technique, such as a Uu interface.

FIG. 2 is a schematic flowchart of a method for configuring an uplink positioning reference signal according to an embodiment of the present invention. The method may be applied to the core network device shown in FIG. 1. The method includes a following step.

In step 202, a first message is sent to a first network device.

The first message includes an uplink positioning reference signal configuration, and the first message is configured to request the first network device to reserve the uplink positioning reference signal configuration. The uplink positioning reference signal configuration is used by a terminal to send uplink positioning reference signal. For example, the uplink positioning reference signal configuration includes a time-frequency resource to be used by the terminal to send the uplink positioning reference signal. Optionally, the first message is a new radio positioning protocol A (NRPPa) message, and the NRPPa message includes at least one of:
- a user equipment association new radio positioning protocol A (UE association NRPPa) message; or
- a non-user equipment association new radio positioning protocol A (non-UE association NRPPa) message.

For example, the first network device reserves the uplink positioning reference signal configuration, it means that the first network device will not allocate the uplink positioning reference signal configuration to a terminal. That is, the uplink positioning reference signal configuration will be retained by the first network device and cannot be used to configure the uplink positioning reference signal for the terminal.

Optionally, the first message also includes time information, and the time information indicates a period of time in which the first network device reserves the uplink positioning reference signal configuration. The LMF network element also sends a second message to the first network device. The second message instructs the first network device to release the uplink positioning reference signal configuration. That is, after receiving the second message, the first network device releases the uplink positioning reference signal configuration. Optionally, the second message is an NRPPa message, and the NRPPa message includes at least one of:
- a UE association NRPPa message; or
- a non-UE association NRPPa message.

Optionally, the uplink positioning reference signal configuration is a configuration of the uplink positioning reference signal that the second network device intends to configure for the terminal. For example, the uplink positioning reference signal configuration is a configuration that the second network device needs to send to the terminal when preparing to configure the uplink positioning reference signal for the terminal. That is, the second network device configures the uplink positioning reference signal for the terminal by sending the uplink positioning reference signal configuration to the terminal. The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again. In this case, the uplink positioning reference signal configuration is obtained by the LMF network element through the second network device.

Optionally, after receiving the first message, the first network device sends a third message to the LMF network element. The third message indicates whether the first network device successfully reserves the uplink positioning reference signal configuration. Further, if the third message indicates that the first network device does not reserve the uplink positioning reference signal configuration, the third message also carries a reason why the first network device does not reserve the uplink positioning reference signal configuration. Optionally, if the first network device reserves the uplink positioning reference signal configuration, information of the first network device is sent to the LMF network element. For example, the first network device sends a cell global ID (CGI) corresponding to the first network device to the LMF network element. Optionally, the first network device also sends a bandwidth part (BWP) of the reserved uplink positioning reference signal to the LMF network element. In addition, time information of the reserved uplink positioning reference signal will also be sent to the LMF network element.

Optionally, when the LMF network element determines that the first network device successfully reserves the uplink positioning reference signal configuration, the LMF network element will send the information of the first network device to the second network device. The information of the first network device is information for identifying the first network device, information for indicating the identity of the first network device, or information for identifying the cell of the first network device. The second network device will then send the information of the first network device to the terminal, to make the terminal learn that it does not need to obtain the uplink positioning reference signal configuration again when reselecting and accessing the cell of the first network device. For example, after receiving the information of the first network device, the second network device sends the information together with the uplink positioning reference signal configuration to be configured for the terminal to the terminal, so as to configure the uplink positioning reference signal for the terminal.

To sum up, with the method according to embodiments of the present invention, the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 3 is a schematic flowchart of a method for configuring an uplink positioning reference signal according to an embodiment of the present invention. The method may be applied to the first access network device shown in FIG. 1. The method includes a following step.

In step 302, a first message sent by an LMF network element is received.

The first message includes an uplink positioning reference signal configuration, and the first message is configured to request the first network device to reserve the uplink positioning reference signal configuration. The uplink positioning reference signal configuration is used by a terminal to send the uplink positioning reference signal. For example, the uplink positioning reference signal configuration includes a time-frequency resource to be used by the terminal to send the uplink positioning reference signal.

Optionally, the uplink positioning reference signal configuration is a configuration used to configure the uplink positioning reference signal for the terminal. For example, the uplink positioning reference signal configuration is configured to configure the uplink positioning reference signal for the terminal through the second network device. The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

Optionally, after receiving the first message, the first network device sends a third message to the LMF network element. The third message indicates whether the first network device successfully reserves the uplink positioning reference signal configuration. Further, if the third message indicates that the first network device does not reserve the uplink positioning reference signal configuration, the third message also carries a reason why the first network device does not reserve the uplink positioning reference signal configuration.

Optionally, in the case where the first network device reserves the uplink positioning reference signal configuration, the first network device sends information of the first network device to the LMF network element. For example, the first network device sends a CGI corresponding to the first network device to the LMF network element. Optionally, the first network device also sends a BWP of the reserved uplink positioning reference signal to the LMF network element. In addition, time information of the reserved uplink positioning reference signal will also be sent to the LMF network element. Therefore, when the LMF network element determines that the first network device successfully reserves the uplink positioning reference signal configuration, the LMF network element can obtain the information of the first network device and send the information of the first network device to the second network device. The second network device will then send the information of the first network device to the terminal, to make the terminal learn that it does not need to obtain the uplink positioning reference signal configuration again when reselecting and accessing the cell of the first network device.

To sum up, with the method according to embodiments of the present invention, the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 4 is a schematic flowchart of a method for configuring an uplink positioning reference signal according to an embodiment of the present invention. The method may be applied to the second access network device shown in FIG. 1. The method includes the following steps.

In step 402, information of a first network device sent by an LMF network element is received.

The first network device is a network device that reserves an uplink positioning reference signal configuration, and the uplink positioning reference signal configuration is configured to configure the uplink positioning reference signal for a terminal through the second network device. The second network device is different from the first network device. The uplink positioning reference signal configuration is used by the terminal to send the uplink positioning reference signal. For example, the uplink positioning reference signal configuration includes a time-frequency resource to be used by the terminal to send the uplink positioning reference signal.

For example, the first network device reserves the uplink positioning reference signal configuration, it means that the first network device will not allocate the uplink positioning reference signal configuration to a terminal. That is, the uplink positioning reference signal configuration will be retained by the first network device and cannot be used to configure the uplink positioning reference signal for the terminal.

Optionally, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again. In this case, the uplink positioning reference signal configuration is obtained by the LMF network element through the second network device.

The information of the first network device is information for identifying the first network device, information for indicating the identity of the first network device, or information for identifying the cell of the first network device. Optionally, the information of the first network device includes at least one of:
- a cell identifier corresponding to the first network device;
- a radio access network (RAN) area identifier corresponding to the first network device; or
- a system message area identifier corresponding to the first network device.

Optionally, the cell identifier consists of cell global IDs (CGIs), for example is a CGI list. The RAN area identifier consists of RAN area codes, for example is a list of RAN area codes. The system message area identifier consists of system information area identifiers (systemInformationAreaIDs), for example is a systemInformationAreaID list. The above first network device includes one or more network devices. Optionally, the information of the first network device may also include other information that can identify the first network device or indicate the area where the first network device is located, such as newly added information of the first network device.

In step 404, the information of the first network device is sent to the terminal.

The second network device sends the information of the first network device to the terminal, to make the terminal learn that it does not need to obtain the uplink positioning reference signal configuration again when reselecting and accessing the cell of the first network device. When the terminal reselects and accesses the cell of the first network device, the terminal will continue to use the uplink positioning reference signal configuration to send the uplink positioning reference signal. Since the first network device reserves the uplink positioning reference signal configuration, the first network device can also receive the uplink positioning reference signal sent by the terminal according to the uplink positioning reference signal configuration.

It should be noted that the above step 404 is an optional step. That is, the step 402 can be implemented separately at the side of second network device as a method for configuring an uplink positioning reference signal.

To sum up, with the method according to embodiments of the present invention, the information of the first network device that reserves the uplink positioning reference signal configuration is sent to the terminal, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 5 is a schematic flowchart of a method for configuring an uplink positioning reference signal according to an embodiment of the present invention. The method may be applied to the terminal shown in FIG. 1. The method includes a following step.

In step 502, information of a first network device sent by a second network device is received.

The first network device is a network device that reserves an uplink positioning reference signal configuration, and the uplink positioning reference signal configuration is configured to configure the uplink positioning reference signal for the terminal through the second network device. The second network device is different from the first network device. The uplink positioning reference signal configuration is used by the terminal to send the uplink positioning reference signal. For example, the uplink positioning reference signal configuration includes a time-frequency resource to be used by the terminal to send the uplink positioning reference signal.

For example, the first network device reserves the uplink positioning reference signal configuration, it means that the first network device will not allocate the uplink positioning reference signal configuration to a terminal. That is, the uplink positioning reference signal configuration will be retained by the first network device and cannot be used to configure the uplink positioning reference signal for the terminal.

Optionally, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again. In this case, the uplink positioning reference signal configuration is obtained by an LMF network element through the second network device.

The information of the first network device is information for identifying the first network device, information for indicating the identity of the first network device, or information for identifying the cell of the first network device.

The information of the first network device sent by the second network device is received, so that the terminal learns that it does not need to obtain the uplink positioning reference signal configuration again when reselecting and accessing the cell of the first network device. When the terminal reselects and accesses the cell of the first network device, the terminal will continue to use the uplink positioning reference signal configuration to send the uplink positioning reference signal. Since the first network device reserves the uplink positioning reference signal configuration, the first network device can also receive the uplink positioning reference signal sent by the terminal according to the uplink positioning reference signal configuration.

Optionally, after receiving the information of the first network device sent by the LMF network element, the second network device directly forwards the information of the first network device, for example, the second network device sends the information of the first network device to the terminal together with the uplink positioning reference signal configuration. The second network device may also process the information of the first network device to convert the information of the first network device into other forms, and then send it to the terminal. That is, at this time, the information of the first network device is determined by the second network device. For example, the information of the first network device received by the second network device is a cell identifier corresponding to the first network device, and the second network device converts it into an RAN area identifier corresponding to the first network device, and sends the RAN area identifier corresponding to the first network device to the terminal.

To sum up, with the method according to embodiments of the present invention, the information of the first network device that reserves the uplink positioning reference signal configuration is sent to the terminal, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

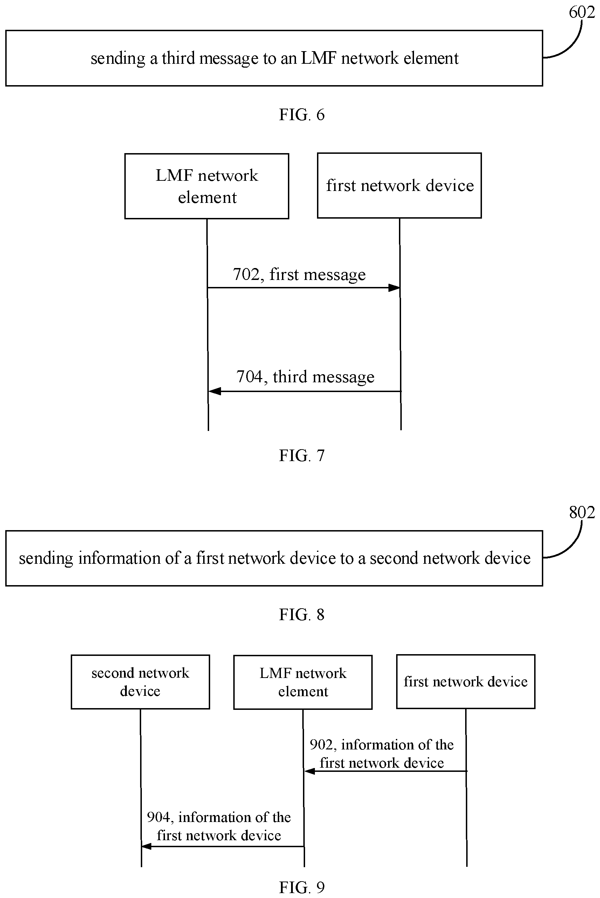

FIG. 6 is a schematic flowchart of a method for configuring an uplink positioning reference signal according to an embodiment of the present invention. The method may be applied to the first access network device shown in FIG. 1. The method includes a following step.

In step 602, a third message is sent to an LMF network element.

The first network device will send the third message to the LMF network element. For example, after receiving a first message sent by the LMF network element, the first network device will send the third message to the LMF network element. The third message indicates whether the first network device successfully reserves the uplink positioning reference signal configuration. Further, if the third message indicates that the first network device does not reserve the uplink positioning reference signal configuration, the third message also carries a reason why the first network device does not reserve the uplink positioning reference signal configuration.

The first message includes an uplink positioning reference signal configuration, and the first message is used by the LMF network element to request the first network device to reserve the uplink positioning reference signal configuration. The uplink positioning reference signal configuration is used by a terminal to send the uplink positioning reference signal. For example, the uplink positioning reference signal configuration includes a time-frequency resource to be used by the terminal to send the uplink positioning reference signal.

Optionally, the uplink positioning reference signal configuration is a configuration used to configure the uplink positioning reference signal for the terminal. For example, the uplink positioning reference signal configuration is configured to configure the uplink positioning reference signal for the terminal through the second network device. The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

Optionally, in the case where the first network device reserves the uplink positioning reference signal configuration, the first network device sends information of the first network device to the LMF network element. For example, the first network device sends a CGI corresponding to the first network device to the LMF network element. Optionally, the first network device also sends a BWP of the reserved uplink positioning reference signal to the LMF network element. In addition, time information of the reserved uplink positioning reference signal will also be sent to the LMF network element.

To sum up, with the method according to embodiments of the present invention, the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 7 is a schematic flowchart of a method for configuring an uplink positioning reference signal according to an embodiment of the present invention. The method may be applied to the system shown in FIG. 1. The method includes the following steps.

In step 702, an LMF network element sends a first message to a first network device.

The first message includes an uplink positioning reference signal configuration, and the first message is configured to request the first network device to reserve the uplink positioning reference signal configuration. The uplink positioning reference signal configuration is used by a terminal to send uplink positioning reference signal. For example, the uplink positioning reference signal configuration includes a time-frequency resource to be used by the terminal to send the uplink positioning reference signal. Optionally, the first message is an NRPPa message, and the NRPPa message includes at least one of:
- a UE association NRPPa message; or
- a non-UE association NRPPa message.

Optionally, the first message also includes time information, and the time information indicates a period of time in which the first network device reserves the uplink positioning reference signal configuration. Optionally, the time information includes at least one of:
- a period of time; or
- a cut-off moment.

The period of time includes a starting moment and a duration. Optionally, the period of time may also include only a valid duration, and the starting moment is determined by the first network device according to a moment when the above first message is received. The time information instructs the first network device to release the uplink positioning reference signal configuration when it is determined that a current moment is not within the period of time indicated by the time information. Optionally, the first network device releases the uplink positioning reference signal configuration, it means that the first network device locally deletes the uplink positioning reference signal configuration.

Optionally, the LMF network element also sends a second message to the first network device. The second message instructs the first network device to release the uplink positioning reference signal configuration. That is, after receiving the second message, the first network device releases the uplink positioning reference signal configuration. Optionally, the second message is an NRPPa message, and the NRPPa message includes at least one of:
- a UE association NRPPa message; or
- a non-UE association NRPPa message.

The uplink positioning reference signal configuration is used by the terminal to send the uplink positioning reference signal. For example, the uplink positioning reference signal configuration includes a time-frequency resource to be used by the terminal to send the uplink positioning reference signal. Optionally, the uplink positioning reference signal configuration is a configuration of the uplink positioning reference signal that the second network device intends to configure for the terminal. For example, the uplink positioning reference signal configuration is a configuration that the second network device needs to send to the terminal when preparing to configure the uplink positioning reference signal for the terminal. That is, the second network device configures the uplink positioning reference signal for the terminal by sending the uplink positioning reference signal configuration to the terminal.

In step 704, the first network device sends a third message to the LMF network element.

After receiving the first message sent by the LMF network element, the first network device sends the third message to the LMF network element. The third message indicates whether the first network device successfully reserves the uplink positioning reference signal configuration. Further, if the third message indicates that the first network device does not reserve the uplink positioning reference signal configuration, the third message also carries a reason why the first network device does not reserve the uplink positioning reference signal configuration.

The first message includes the uplink positioning reference signal configuration, and the first message is used by the LMF network element to request the first network device to reserve the uplink positioning reference signal configuration. The uplink positioning reference signal configuration is used by the terminal to send the uplink positioning reference signal. For example, the uplink positioning reference signal configuration includes a time-frequency resource to be used by the terminal to send the uplink positioning reference signal.

Optionally, the uplink positioning reference signal configuration is a configuration used to configure the uplink positioning reference signal for the terminal. For example, the uplink positioning reference signal configuration is configured to configure the uplink positioning reference signal for the terminal through the second network device. The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

Optionally, in the case where the first network device reserves the uplink positioning reference signal configuration, the first network device sends information of the first network device to the LMF network element. For example, the first network device sends a CGI corresponding to the first network device to the LMF network element. Optionally, the first network device also sends a bandwidth part (BWP) of the reserved uplink positioning reference signal to the LMF network element. In addition, time information of the reserved uplink positioning reference signal will also be sent to the LMF network element.

To sum up, with the method according to embodiments of the present invention, the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 8 is a schematic flowchart of a method for configuring an uplink positioning reference signal according to an embodiment of the present invention. The method may be applied to the core network device shown in FIG. 1. The method includes a following step.

In step 802, information of a first network device is sent to a second network device.

When it is determined that the first network device successfully reserves the uplink positioning reference signal configuration, the LMF network element will send the information of the first network device to the second network device. Optionally, the LMF network element will first send a first message to the first network device, to request the first network device to reserve the uplink positioning reference signal configuration. After receiving the first message, the first network device will send a third message to the LMF network element. The third message indicates whether the first network device successfully reserves the uplink positioning reference signal configuration. Further, the LMF network element can determine whether the first network device successfully reserves the uplink positioning reference signal configuration. Optionally, when the first network device reserves the uplink positioning reference signal configuration, the first network device sends the information of the first network device to the LMF network element. For example, the first network device sends a CGI corresponding to the first network device to the LMF network element. Optionally, the first network device also sends a BWP of the reserved uplink positioning reference signal to the LMF network element. In addition, time information of the reserved uplink positioning reference signal will also be sent to the LMF network element.

The information of the first network device is information for identifying the first network device, information for indicating the identity of the first network device, or information for identifying the cell of the first network device. Optionally, the information of the first network device includes at least one of:
- a cell identifier corresponding to the first network device;
- an RAN area identifier corresponding to the first network device; or
- a system message area identifier corresponding to the first network device.

Optionally, the cell identifier consists of CGIs, for example is a CGI list. The RAN area identifier consists of RAN area codes, for example is a list of RAN area codes. The system message area identifier consists of systemInformationAreaIDs, for example is a systemInformationAreaID list. That is, the above first network device may include one network device, or may include a plurality of network devices.

Optionally, when it is determined that the first network device successfully reserves the uplink positioning reference signal configuration, the LMF network element sends the information of the first network device to the second network device via a fourth message. Optionally, the fourth message is an NRPPa message, and the NRPPa message includes at least one of:
- a UE association NRPPa message; or
- a non-UE association NRPPa message.

When receiving the information of the first network device, the second network device will send the information of the first network device to the terminal, so that the terminal can learn that it does not need to obtain the uplink positioning reference signal configuration again when reselecting and accessing the cell of the first network device. That is, the second network device configures the uplink positioning reference signal for the terminal after obtaining the information of the first network device.

To sum up, with the method according to embodiments of the present invention, the information of the first network device that reserves the uplink positioning reference signal configuration is sent to the second network device, and the second network device can send the information of the first network device to the terminal, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 9 is a schematic flowchart of a method for configuring an uplink positioning reference signal according to an embodiment of the present invention. The method may be applied to the system shown in FIG. 1. The method includes the following steps.

In step 902, a first network device sends information of the first network device to an LMF network element.

After receiving a first message sent by the LMF network element, the first network device determines whether to reserve an uplink positioning reference signal configuration. The first message includes the uplink positioning reference signal configuration, and the first message is used by the LMF network element to request the first network device to reserve the uplink positioning reference signal configuration. The uplink positioning reference signal configuration is used by a terminal to send the uplink positioning reference signal. For example, the uplink positioning reference signal configuration includes a time-frequency resource to be used by the terminal to send the uplink positioning reference signal.

Optionally, the uplink positioning reference signal configuration is a configuration used to configure the uplink positioning reference signal for the terminal. For example, the uplink positioning reference signal configuration is configured to configure the uplink positioning reference signal for the terminal through the second network device. The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

When the first network device successfully reserves the uplink positioning reference signal configuration, it will send the information of the first network device to the LMF network element. The information of the first network device is information for identifying the first network device, information for indicating the identity of the first network device, or information for identifying the cell of the first network device. Optionally, the information of the first network device includes at least one of:
- a cell identifier corresponding to the first network device;
- an RAN area identifier corresponding to the first network device; or
- a system message area identifier corresponding to the first network device.

Optionally, the cell identifier consists of CGIs, for example is a CGI list. The RAN area identifier consists of RAN area codes, for example is a list of RAN area codes. The system message area identifier consists of systemInformationAreaIDs, for example is a systemInformationAreaID list. That is, the above first network device may include one network device, or may include a plurality of network devices.

In step 904, the LMF network element sends the information of the first network device to the second network device.

Optionally, when it is determined that the first network device successfully reserves the uplink positioning reference signal configuration, the LMF network element sends the information of the first network device to the second network device via a fourth message. Optionally, the fourth message is an NRPPa message, and the NRPPa message includes at least one of:
- a UE association NRPPa message; or
- a non-UE association NRPPa message.

When receiving the information of the first network device, the second network device will send the information of the first network device to the terminal, so that the terminal can learn that it does not need to obtain the uplink positioning reference signal configuration again when reselecting and accessing the cell of the first network device. When reselecting and accessing the cell of the first network device, the terminal sends the uplink positioning reference signal through the uplink positioning reference signal configuration. The second network device configures the uplink positioning reference signal for the terminal after obtaining the information of the first network device.

To sum up, with the method according to embodiments of the present invention, the information of the first network device that reserves the uplink positioning reference signal configuration is sent to the second network device, and the second network device can send the information of the first network device to the terminal, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

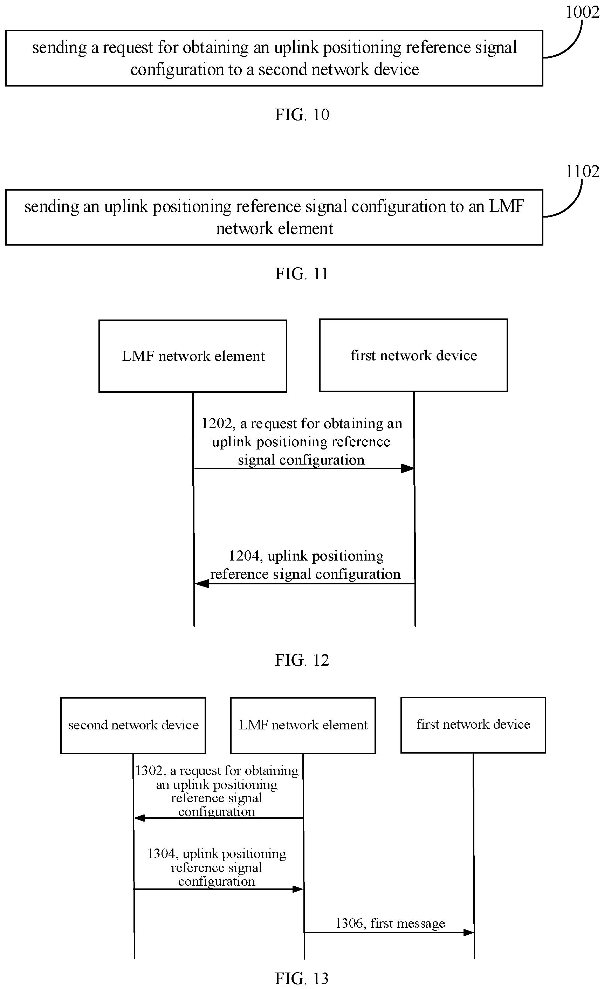

FIG. 10 is a schematic flowchart of a method for configuring an uplink positioning reference signal according to an embodiment of the present invention. The method may be applied to the core network device shown in FIG. 1. The method includes a following step.

In step 1002, a request for obtaining an uplink positioning reference signal configuration is sent to a second network device.

The request is used to obtain, from the second network device, the uplink positioning reference signal configuration to be configured by the second network device for a terminal. The uplink positioning reference signal configuration is used by the terminal to send the uplink positioning reference signal. For example, the uplink positioning reference signal configuration includes a time-frequency resource to be used by the terminal to send the uplink positioning reference signal. When the LMF network element requests to obtain the uplink positioning reference signal configuration, the second network device has not configured the uplink positioning reference signal configuration for the terminal, but intends to configure the uplink positioning reference signal configuration for the terminal, and the uplink positioning reference signal configuration obtained by the LMF is the configuration of the uplink positioning reference signal that the second network device intends to configure for the terminal.

After acquiring the uplink positioning reference signal configuration, the LMF network element can send a first message to a first network device. The first message includes the uplink positioning reference signal configuration obtained by the LMF network element, and the first message is configured to request the first network device to reserve the uplink positioning reference signal configuration.

To sum up, with the method according to embodiments of the present invention, the uplink positioning reference signal configuration is obtained, and the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 11 is a schematic flowchart of a method for configuring an uplink positioning reference signal according to an embodiment of the present invention. The method may be applied to the second access network device shown in FIG. 1. The method includes a following step.

In step 1102, an uplink positioning reference signal configuration is sent to an LMF network element.

The uplink positioning reference signal configuration is an uplink positioning reference signal configuration that the second network device intends to configure for the terminal. The uplink positioning reference signal configuration is used by a terminal to send the uplink positioning reference signal. For example, the uplink positioning reference signal configuration includes a time-frequency resource to be used by the terminal to send the uplink positioning reference signal. When the LMF network element requests to obtain the uplink positioning reference signal configuration, the second network device has not configured the uplink positioning reference signal configuration for the terminal, but intends to configure the uplink positioning reference signal configuration for the terminal. For example, the second network device sends the uplink positioning reference signal configuration to the terminal after receiving first network device information sent by the LMF or receiving instruction information sent by the LMF.

After acquiring the uplink positioning reference signal configuration, the LMF network element can send a first message to a first network device. The first message includes the uplink positioning reference signal configuration obtained by the LMF network element, and the first message is configured to request the first network device to reserve the uplink positioning reference signal configuration.

The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

To sum up, with the method according to embodiments of the present invention, the uplink positioning reference signal configuration is sent, so that the LMF network element can instruct the first network device to reserve the uplink positioning reference signal configuration, so the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 12 is a schematic flowchart of a method for configuring an uplink positioning reference signal according to an embodiment of the present invention. The method may be applied to the system shown in FIG. 1. The method includes the following steps.

In step 1202, an LMF network element sends a request for obtaining an uplink positioning reference signal configuration to a second network device.

The request is used to obtain, from the second network device, the uplink positioning reference signal configuration to be configured by the second network device for a terminal. The uplink positioning reference signal configuration is used by the terminal to send the uplink positioning reference signal. For example, the uplink positioning reference signal configuration includes a time-frequency resource to be used by the terminal to send the uplink positioning reference signal. When the LMF network element requests to obtain the uplink positioning reference signal configuration, the second network device has not configured the uplink positioning reference signal configuration for the terminal, but intends to configure the uplink positioning reference signal configuration for the terminal.

In step 1204, the second network device sends the uplink positioning reference signal configuration to the LMF network element.

After acquiring the uplink positioning reference signal configuration, the LMF network element can send a first message to the first network device. The first message includes the uplink positioning reference signal configuration obtained by the LMF network element, and the first message is configured to request the first network device to reserve the uplink positioning reference signal configuration.

The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

To sum up, with the method according to embodiments of the present invention, the uplink positioning reference signal configuration is obtained, and the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 13 is a schematic flowchart of a method for configuring an uplink positioning reference signal according to an embodiment of the present invention. The method may be applied to the system shown in FIG. 1. The method includes the following steps.

In step 1302, an LMF network element sends a request for obtaining an uplink positioning reference signal configuration to a second network device.

The request is used to obtain, from the second network device, the uplink positioning reference signal configuration to be configured by the second network device for a terminal. The uplink positioning reference signal configuration is used by the terminal to send the uplink positioning reference signal. For example, the uplink positioning reference signal configuration includes a time-frequency resource to be used by the terminal to send the uplink positioning reference signal. When the LMF network element requests to obtain the uplink positioning reference signal configuration, the second network device has not configured the uplink positioning reference signal configuration for the terminal, but intends to configure the uplink positioning reference signal configuration for the terminal.

In step 1304, the second network device sends the uplink positioning reference signal configuration to the LMF network element.

In step 1306, LMF network element sends a first message to a first network device.

After acquiring the uplink positioning reference signal configuration, the LMF network element can send the first message to the first network device. The first message includes the uplink positioning reference signal configuration obtained by the LMF network element, and the first message is configured to request the first network device to reserve the uplink positioning reference signal configuration.

The second network device is different from the first network device. Further, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

To sum up, with the method according to embodiments of the present invention, the uplink positioning reference signal configuration is obtained, and the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

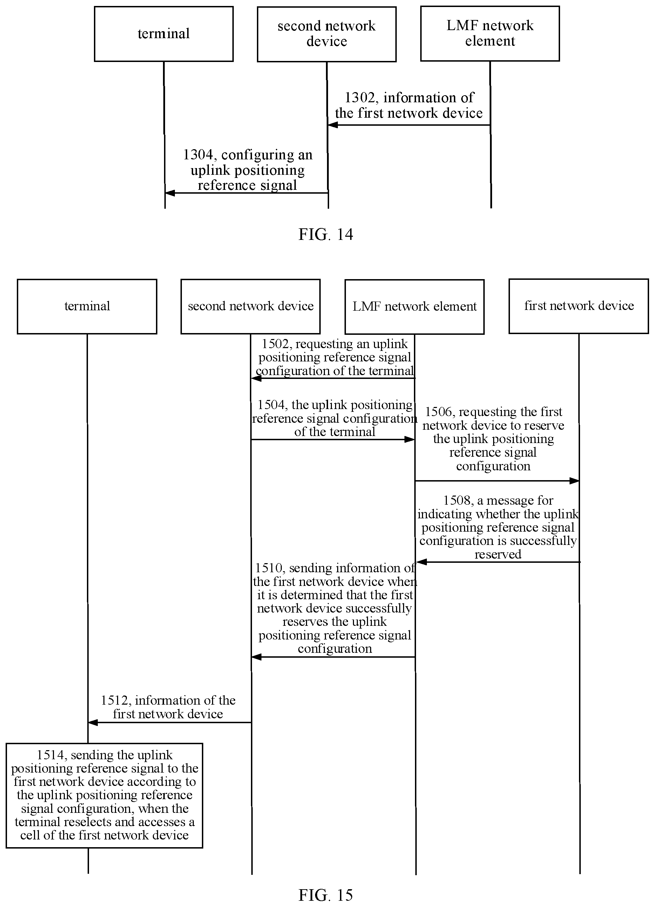

FIG. 14 is a schematic flowchart of a method for configuring an uplink positioning reference signal according to an embodiment of the present invention. The method may be applied to the system shown in FIG. 1. The method includes the following steps.

In step 1402, an LMF network element sends information of a first network device to a second network device.

The first network device is a network device that reserves an uplink positioning reference signal configuration, and the uplink positioning reference signal configuration is configured to configure the uplink positioning reference signal for a terminal through the second network device. The second network device is different from the first network device. The uplink positioning reference signal configuration is used by the terminal to send the uplink positioning reference signal. For example, the uplink positioning reference signal configuration includes a time-frequency resource to be used by the terminal to send the uplink positioning reference signal.

Optionally, a first cell where the first network device is located is a neighboring cell of a second cell where the second network device is located, and there are more than one first network device. The second cell is a serving cell of the terminal. In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again. In this case, the uplink positioning reference signal configuration is obtained by the LMF network element through the second network device.

The information of the first network device is information for identifying the first network device, information for indicating the identity of the first network device, or information for identifying the cell of the first network device. Optionally, the information of the first network device includes at least one of:
- a cell identifier corresponding to the first network device;
- an RAN area identifier corresponding to the first network device; or
- a system message area identifier corresponding to the first network device.

Optionally, the cell identifier consists of CGIs, for example is a CGI list. The RAN area identifier consists of RAN area codes, for example is a list of RAN area codes. The system message area identifier consists of systemInformationAreaIDs, for example is a systemInformationAreaID list. That is, the above first network device may include one network device, or may include a plurality of network devices.

In step 1404, the second network device configures the uplink positioning reference signal to the terminal.

After receiving the information of the first network device sent by the LMF network element, the second network device can configure the uplink positioning reference signal for the terminal. Configuring the uplink positioning reference signal is achieved by sending the above uplink positioning reference signal configuration to the terminal. During the process of sending the uplink positioning reference signal configuration, the second network device will also send the information of the first network device to the terminal, so that the terminal can learn that it does not need to obtain the uplink positioning reference signal configuration again when reselecting and accessing the cell of the first network device. That is, the second network device configures the uplink positioning reference signal for the terminal after obtaining the information of the first network device.

In the case where the first network device reserves the uplink positioning reference signal configuration, if the terminal reselects and accesses the cell where the second network device is located, the terminal can continue to use the uplink positioning reference signal configuration sent by the second network device to send the uplink positioning reference signal, without need to obtain the uplink positioning reference signal configuration again.

To sum up, with the method according to embodiments of the present invention, the information of the first network device that reserves the uplink positioning reference signal configuration is sent to the terminal, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

FIG. 15 is a schematic flowchart of a method for configuring an uplink positioning reference signal according to an embodiment of the present invention. The method may be applied to the system shown in FIG. 1. The method includes the following steps.

In step 1502, an LMF network element requests an uplink positioning reference signal configuration of a terminal from a second network device.

The uplink positioning reference signal configuration is configured to configure the uplink positioning reference signal for the terminal through the second network device. The uplink positioning reference signal configuration is used by the terminal to send the uplink positioning reference signal. For example, the uplink positioning reference signal configuration includes a time-frequency resource to be used by the terminal to send the uplink positioning reference signal. Optionally, a second cell where the second network device is located is a serving cell of the terminal.

Optionally, the LMF network element will send a request to different network devices to request the uplink positioning reference signal configurations configured by the different network devices for the terminal. That is, the second network device includes one or more network devices.

In step 1504, the second network device sends the uplink positioning reference signal configuration of the terminal to the LMF network element.

When receiving the above request from the LMF network element, the second network device will send the uplink positioning reference signal configuration of the terminal to the LMF network element. Optionally, the uplink positioning reference signal configuration is an uplink positioning reference signal configuration that is stored in the second network device and has been configured for the terminal. Optionally, the second network device will send a part or all of the configured uplink positioning reference signal configuration to the LMF network element.

In step 1506, the LMF network element requests the first network device to reserve the uplink positioning reference signal configuration.

The LMF network element sends a first message to the first network device to request the first network device to reserve the uplink positioning reference signal configuration. The first message includes the uplink positioning reference signal configuration, and the first message is configured to request the first network device to reserve the uplink positioning reference signal configuration. Optionally, the first message is an NRPPa message, and the NRPPa message includes at least one of:
- a UE association NRPPa message; or
- a non-UE association NRPPa message.

Optionally, the first message also includes time information, and the time information indicates a period of time in which the first network device reserves the uplink positioning reference signal configuration. Optionally, the time information includes at least one of:
- a period of time; or
- a cut-off moment.

The period of time includes a starting moment and a duration. Optionally, the period of time may also include only a valid duration, and the starting moment is determined by the first network device according to a moment when the above first message is received. The time information instructs the first network device to release the uplink positioning reference signal configuration when it is determined that a current moment is not within the period of time indicated by the time information. Optionally, the first network device releases the uplink positioning reference signal configuration, it means that the first network device locally deletes the uplink positioning reference signal configuration.

Optionally, the first network device can determine whether the above uplink positioning reference signal configuration is valid according to the time information, and then release the uplink positioning reference signal configuration or use the uplink positioning reference signal configuration. The first network device determines the current moment through universal time coordinated (UTC). In the case where the time information includes the period of time and the cut-off moment, the first network device will release the uplink positioning reference signal configuration when the first network device determines that the current moment does not meet at least one of:
the current moment being within the period of time indicated by the starting moment and the duration; or
the current moment not exceeding the cut-off moment.

For example, the current moment determined by the first network device is 2022-03-25 15:00:00, and the period of time indicated by the starting moment and the duration is from 2022-03-25 14:00:00 to 2022-03-25 16:00:00, then the first network device will determine that the current moment is within the period of time indicated by the starting moment and the duration. The current moment determined by the first network device is 2022-03-25 15:00:00, and the cut-off moment is 2022-03-25 14:00:00, then the first network device will determine that the current moment exceeds the valid cut-off moment.

Optionally, when the first network device determines whether to release the uplink positioning reference signal configuration according to the period of time, the first network device may also use a timer to make the determination. For example, the first network device starts the timer at the starting moment and sets a duration of the timer to the above-mentioned duration. When the timer expires, it will be regarded as that the first network device determines that the current moment is not within the period of time indicated by the starting moment and the duration. Furthermore, when the time information only includes the period of time, the first network device will release the uplink positioning reference signal configuration.

Optionally, the first network device periodically determines whether to release the uplink positioning reference signal configuration, and the period/cycle is configured in the first network device or instructed by other network device (such as the LMF network elements) to the first network device. In addition, the first network device may also determine whether to release the uplink positioning reference signal configuration according to an instruction from other network devices. In addition, the first network device may also determine whether to release the uplink positioning reference signal configuration when a terminal performs a cell reselection and accesses the cell of the first network device.

Optionally, the LMF network element will also sends a second message to the first network device. The second message instructs the first network device to release the uplink positioning reference signal configuration. That is, after receiving the second message, the first network device releases the uplink positioning reference signal configuration. Optionally, the second message is an NRPPa message, and the NRPPa message includes at least one of:
- a UE association NRPPa message; or
- a non-UE association NRPPa message.

Optionally, a first cell where the first network device is located is a neighboring cell of a second cell where the second network device is located, and there are more than one first network device. The second cell is a serving cell of the terminal. The LMF network element will also send the above time information to the terminal through the second network device, to assist the terminal in determining whether to re-obtain the uplink positioning reference signal configuration when the terminal accesses the cell of the first network device.

In step 1508, the first network device sends a message to the LMF network element to indicate whether the uplink positioning reference signal configuration is successfully reserved.

The first network device will send a third message to the LMF network element to feed back whether the first network device successfully reserves the uplink positioning reference signal configuration. The third message indicates whether the first network device successfully reserves the uplink positioning reference signal configuration. Optionally, when the third message indicates that the first network device does not reserve the uplink positioning reference signal configuration, the third message also carries a reason why the first network device does not reserve the uplink positioning reference signal configuration. For example, the reason is that in the first network device, this uplink positioning reference signal configuration has been configured to other terminal. Optionally, in the case where the first network device reserves the uplink positioning reference signal configuration, the information of the first network device is sent to the LMF network element. For example, the first network device sends a CGI corresponding to the first network device to the LMF network element. Optionally, the first network device may also sends a BWP of the reserved uplink positioning reference signal to the LMF network element. In addition, the first network device may also send the time information of the reserved uplink positioning reference signal to the LMF network element. Optionally, the third message is an NRPPa message, and the NRPPa message includes at least one of:
- a UE association NRPPa message; or
- a non-UE association NRPPa message.

In step 1510, when it is determined that the first network device successfully reserves the uplink positioning reference signal configuration, the LMF network element sends the information of the first network device to the second network device.

The information of the first network device is information for identifying the first network device, information for indicating the identity of the first network device, or information for identifying the cell of the first network device. Optionally, the information of the first network device includes at least one of:
- a cell identifier corresponding to the first network device;
- an RAN area identifier corresponding to the first network device; or
- a system message area identifier corresponding to the first network device.

Optionally, the cell identifier consists of CGIs, for example is a CGI list. The RAN area identifier consists of RAN area codes, for example is a list of RAN area codes. The system message area identifier consists of systemInformationAreaIDs, for example is a systemInformationAreaID list. That is, the above first network device may include one network device, or may include a plurality of network devices. Optionally, the information of the first network device may also include other information that can identify the first network device or indicate the area where the first network device is located, such as newly added information of the first network device.

Optionally, when it is determined that the first network device successfully reserves the uplink positioning reference signal configuration, the LMF network element sends the information of the first network device to the second network device via a fourth message. Optionally, the fourth message is an NRPPa message, and the NRPPa message includes at least one of:
- a UE association NRPPa message; or
- a non-UE association NRPPa message.

In step 1512, the second network device sends the information of the first network device to the terminal.

The second network device sends the information of the first network device to the terminal, so that the terminal can learn that that it does not need to obtain the uplink positioning reference signal configuration again when reselecting and accessing the cell of the first network device.

In step 1514, when the terminal reselects and accesses the cell of the first network device, the terminal sends the uplink positioning reference signal to the first network device according to the uplink positioning reference signal configuration.

When the terminal reselects and accesses the cell of the first network device, the terminal will continue to use the uplink positioning reference signal configuration to send the uplink positioning reference signal. Since the first network device reserves the uplink positioning reference signal configuration, the first network device can also receive the uplink positioning reference signal from the terminal according to the uplink positioning reference signal configuration.

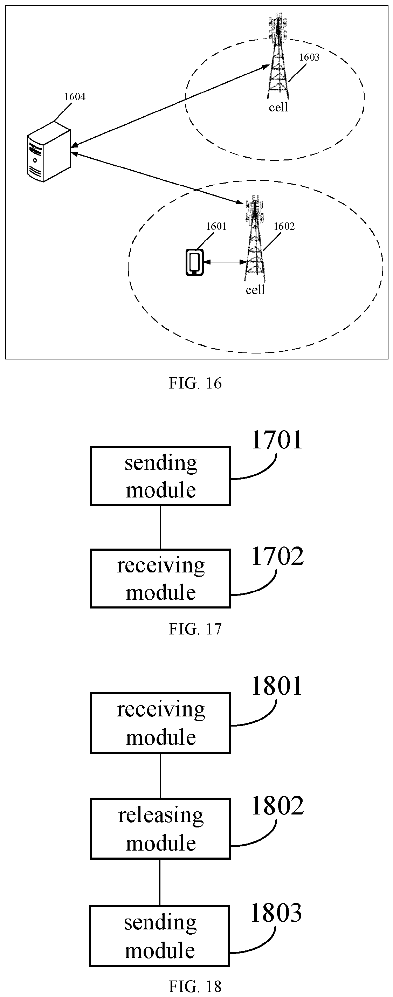

For example, FIG. 16 is a schematic diagram showing cells according to an example embodiment of the present invention. As shown in FIG. 16, a cell currently accessed by a terminal 1601 is a cell of a second base station 1602. The second base station 1602 will send an uplink positioning reference signal configuration to the terminal 1601 to configure an uplink positioning reference signal for the terminal 1601. An LMF network element 1604 will request the second base station 1602 to obtain the uplink positioning reference signal configuration that is configured by the second base station 1602 for the terminal 1601. After obtaining the uplink positioning reference signal configuration, the LMF network element 1604 requests a first base station 1603 to reserve the uplink positioning reference signal configuration. A cell of the first base station 1603 is a neighboring cell of the cell of the second base station 1602. After determining that the first base station 1603 successfully reserves the uplink positioning reference signal configuration, the LMF network element 1604 will send information of the first base station 1603 to the second base station 1602, and the second base station 1602 will send the information of the first base station 1603 to the terminal 1601. In this way, the terminal 1601 learns that when reselecting and accessing the cell of the first base station 1603, it can continue to use the currently configured uplink positioning reference signal configuration, without need to re-obtain the uplink positioning reference signal configuration. After the terminal 1601 reselects and accesses the cell of the first base station 1603, it will continue to use the saved uplink positioning reference signal configuration to send the uplink positioning reference signal. The first base station 1603 can receive the uplink positioning reference signal sent by the terminal 1601 according to its reserved uplink positioning reference signal configuration.

To sum up, with the method according to embodiments of the present invention, the first network device is instructed to reserve the uplink positioning reference signal configuration, so that the terminal using the uplink positioning reference signal configuration to send the uplink positioning reference signal can continue to use the uplink positioning reference signal configuration when the terminal reselects and accesses the cell of the first network device, which avoids frequent information interaction with the network device, and reduces the positioning delay and the power consumption of the terminal.

In addition, by instructing the network device in the neighboring cell of the serving cell of the terminal to reserve the uplink positioning reference signal configuration, the terminal does not need to re-obtain the uplink positioning reference signal configuration when reselecting and accessing the neighboring cell, and it is ensured that the network device in the neighboring cell can receive the uplink positioning reference signal sent by the terminal. By using the time information or the second message to instruct the first network device to release the uplink positioning reference signal configuration, it is possible to avoid the problem of resource shortage caused by the fact that the first network device continuously reserves the uplink positioning reference signal configuration to affect configuring the uplink positioning reference signals for other terminals.

It should be noted that the sequence of the method steps provided in embodiments of the present invention may be adjusted appropriately, and the steps may also be added or deleted accordingly according to the situations. Other variable methods are conceivable for any person familiar with the technical field within the technical scope disclosed in the present invention, and should be covered by the protection scope of the present invention, and therefore will not be elaborated here again.

FIG. 17 is a schematic block diagram of an apparatus for configuring an uplink positioning reference signal according to an example embodiment of the present invention. As shown in FIG. 17, the apparatus includes a sending module 1701. The sending module 1701 is configured to send a first message to a first network device. The first message includes an uplink positioning reference signal configuration, and the first message is configured to request the first network device to reserve the uplink positioning reference signal configuration.

In an optional design, the uplink positioning reference signal configuration is configured to configure the uplink positioning reference signal for a terminal through a second network device.

In an optional design, a first cell where the first network device is located is a neighboring cell of a second cell where the second network device is located, and there are more than one first network device; and the second cell is a serving cell of the terminal.

In an optional design, the first message includes time information, and the time information indicates a period of time in which the first network device reserves the uplink positioning reference signal configuration.

In an optional design, the time information includes at least one of: a period of time; or cut-off moment. The period of time includes a starting moment and a duration.

In an optional design, the time information instructs the first network device to release the uplink positioning reference signal configuration when it is determined that a current moment is not within the period of time indicated by the time information.

In an optional design, the sending module 1701 is configured to: send a second message to the first network device. The second message instructs the first network device to release the uplink positioning reference signal configuration.

In an optional design, the apparatus further includes: a receiving module 1702 configured to receive a third message sent by the first network device. The third message indicates whether the first network device successfully reserves the uplink positioning reference signal configuration.

In an optional design, when the third message indicates that the first network device does not reserve the uplink positioning reference signal configuration, the third message further carries a reason why the first network device does not reserve the uplink positioning reference signal configuration.

In an optional design, the apparatus further includes: a receiving module 1702 configured to acquire the uplink positioning reference signal configuration through the second network device.

In an optional design, the sending module 1701 is configured to: send information of the first network device to the second network device when it is determined that the first network device successfully reserves the uplink positioning reference signal configuration.

In an optional design, the information of the first network device includes at least one of: a cell identifier corresponding to the first network device; an RAN area identifier corresponding to the first network device; or a system message area identifier corresponding to the first network device.

In an optional design, the sending module 1701 is configured to: send the information of the first network device to the second network device via a fourth message.

In an optional design, the second network device sends the information of the first network device to the terminal.

In an optional design, the first message, the second message, the third message or the fourth message is an NRPPa message, and the NRPPa message includes at least one of: a UE association NRPPa message; or a non-UE association NRPPa message.

FIG. 18 is a schematic block diagram of an apparatus for configuring an uplink positioning reference signal according to an example embodiment of the present invention. As shown in FIG. 18, the apparatus includes a receiving module 1801. The receiving module 1801 is configured to receive a first message sent by an LMF network element. The first message includes an uplink positioning reference signal configuration, and the first message is configured to request the first network device to reserve the uplink positioning reference signal configuration.

In an optional design, the uplink positioning reference signal configuration is configured to configure the uplink positioning reference signal for a terminal through a second network device.

In an optional design, a first cell where the first network device is located is a neighboring cell of a second cell where the second network device is located, and there are more than one first network device; and the second cell is a serving cell of the terminal.

In an optional design, the first message includes time information, and the time information indicates a period of time in which the first network device reserves the uplink positioning reference signal configuration.

In an optional design, the time information includes at least one of: a period of time; or cut-off moment. The period of time includes a starting moment and a duration.

In an optional design, the apparatus further includes: a releasing module 1802 configured to release the uplink positioning reference signal configuration when the first network device determines that a current moment is not within the period of time indicated by the time information.

In an optional design, the receiving module 1801 is configured to: receive a second message sent by the LMF network element. The second message instructs the first network device to release the uplink positioning reference signal configuration.

In an optional design, the apparatus further includes: a sending module 1803 configured to send a third message to the LMF network element. The third message indicates whether the first network device successfully reserves the uplink positioning reference signal configuration.

In an optional design, when the third message indicates that the first network device does not reserve the uplink positioning reference signal configuration, the third message further carries a reason why the first network device does not reserve the uplink positioning reference signal configuration.

In an optional design, the uplink positioning reference signal configuration is acquired by the LMF network element through the second network device.

In an optional design, the LMF network element is configured to send information of the first network device to the second network device when it is determined that the first network device successfully reserves the uplink positioning reference signal configuration.

In an optional design, the information of the first network device includes at least one of: a cell identifier corresponding to the first network device; an RAN area identifier corresponding to the first network device; or a system message area identifier corresponding to the first network device.

In an optional design, the LMF network element is configured to send the information of the first network device to the second network device via a fourth message.

In an optional design, the second network device is configured to send the information of the first network device to the terminal.

In an optional design, the first message, the second message, the third message or the fourth message is an NRPPa message, and the NRPPa message includes at least one of: a UE association NRPPa message; or a non-UE association NRPPa message.

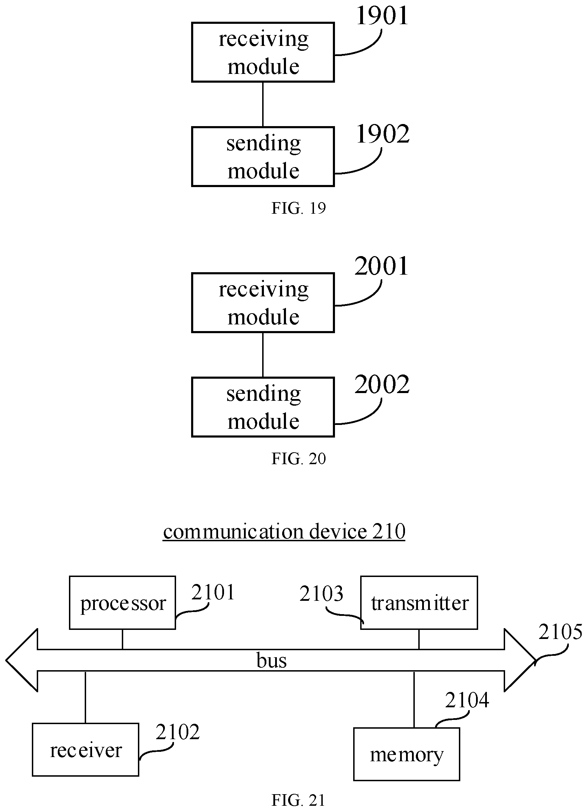

FIG. 19 is a schematic block diagram of an apparatus for configuring an uplink positioning reference signal according to an example embodiment of the present invention. As shown in FIG. 19, the apparatus includes a receiving module 1901 and a sending module 1902. The receiving module 1901 is configured to: receive information of a first network device sent by an LMF network element; and the sending module 1902 is configured to: send the information of the first network device to a terminal. The first network device is a network device that reserves an uplink positioning reference signal configuration, and the uplink positioning reference signal configuration is configured to configure the uplink positioning reference signal for the terminal through the second network device.

In an optional design, the information of the first network device includes at least one of: a cell identifier corresponding to the first network device; an RAN area identifier corresponding to the first network device; or a system message area identifier corresponding to the first network device.

In an optional design, a first cell where the first network device is located is a neighboring cell of a second cell where the second network device is located, and there are more than one first network device; and the second cell is a serving cell of the terminal.

In an optional design, the sending module 1902 is configured to: send the uplink positioning reference signal configuration to the LMF network element.

In an optional design, the receiving module 1901 is configured to: receive the information of the first network device sent by the LMF network element via a fourth message.

In an optional design, the fourth message is an NRPPa message, and the NRPPa message includes at least one of: a UE association NRPPa message; or a non-UE association NRPPa message.

FIG. 20 is a schematic block diagram of an apparatus for configuring an uplink positioning reference signal according to an example embodiment of the present invention. As shown in FIG. 20, the apparatus includes a receiving module 2001. The receiving module 2001 is configured to: receive information of a first network device sent by a second network device. The first network device is a network device that reserves an uplink positioning reference signal configuration, and the uplink positioning reference signal configuration is configured to configure the uplink positioning reference signal for the terminal through the second network device.

In an optional design, the information of the first network device includes at least one of: a cell identifier corresponding to the first network device; an RAN area identifier corresponding to the first network device; or a system message area identifier corresponding to the first network device.

In an optional design, a first cell where the first network device is located is a neighboring cell of a second cell where the second network device is located, and there are more than one first network device; and the second cell is a serving cell of the terminal.

In an optional design, the apparatus further includes: a sending module 2002 configured to send the uplink positioning reference signal to the first network device according to the uplink positioning reference signal configuration, when the terminal reselects and accesses the first cell.

It should be noted that, in functional implementation, the apparatus according to the above embodiments are illustrated with reference to the above division of the functional modules as examples. In practical applications, the above-mentioned functions may be allocated to different functional modules as needed. That is, the internal structure of the apparatus is divided into different functional modules to complete some or all of the functions described above.

Regarding the apparatus in the above embodiments, the specific manners in which various modules thereof perform respective operations have been described in detail in embodiments related to the method, and thus will not be elaborated here.

FIG. 21 is a schematic block diagram of a communication device (a terminal or a network device) according to an example embodiment of the present invention, and the communication device 210 includes: a processor 2101, a receiver 2102, a transmitter 2103, a memory 2104 and a bus 2105.

The processor 2101 includes one or more processing cores, and the processor 2101 executes various functional applications and information processing by running software programs and modules.

The receiver 2102 and the transmitter 2103 may be implemented as a communication component, and the communication component may be a communication chip.

The memory 2104 is connected to the processor 2101 via the bus 2105.

The memory 2104 may be used to store at least one instruction, and the processor 2101 is used to execute the at least one instruction to implement various steps in the above method embodiments.

In addition, the memory 2104 may be implemented using any type of volatile or nonvolatile memory devices, or a combination thereof, including but not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, a programmable read-only memory (PROM).

When the communication device is implemented as a terminal, the processor and the transceiver in the communication device involved in embodiments of the present invention may be implemented together as a communication chip, or the transceiver forms a separate communication chip. The transmitter in the transceiver performs the sending step performed by the terminal in any of the above methods, the receiver in the transceiver performs the receiving step performed by the terminal in any of the above methods, and the processor performs steps other than the sending and receiving steps, which will not be elaborated here.

When the communication device is implemented as a network device, the processor and the transceiver in the communication device involved in embodiments of the present invention may be implemented together as a communication chip, or the transceiver forms a separate communication chip. The transmitter in the transceiver performs the sending step performed by the network device in any of the above methods, the receiver in the transceiver performs the receiving step performed by the network device in any of the above methods, and the processor performs steps other than the sending and receiving steps, which will not be elaborated here.

In an example embodiment, a computer-readable storage medium is provided. The computer-readable storage medium has stored therein at least one instruction, at least one program, a code set or an instruction set, and the at least one instruction, the at least one program, the code set or the instruction set is loaded and executed by the processor to perform the method for configuring an uplink positioning reference signal according to the various method embodiments described above.

In an example embodiment, a chip is provided. The chip includes a programmable logic circuit and/or a program instruction. When the chip is run on a communication device, the method for configuring an uplink positioning reference signal according to the various method embodiments described above is performed.

In an example embodiment, a computer program product is provided. When the computer program product is run on a processor of a computer equipment, the computer equipment performs the method for configuring an uplink positioning reference signal described above

It may be recognized by those skilled in the art that in one or more examples above, the functions described in embodiments of the present invention may be implemented using hardware, software, firmware, or any combination thereof. When implemented using the software, the functions may be stored in a computer-readable medium or transmitted as one or more instructions or codes in the computer-readable medium. The computer-readable medium includes a computer storage medium and a communication medium, and the communication medium includes any medium that facilitates transfer a computer program from one place to another. The storage medium may be any available medium that can be accessed by a general purpose or special purpose computer.

The above are only example embodiments of the present invention and are not intended to limit the present invention. Any modifications, equivalent substitutions, improvements, etc. made within the spirit and principles of the present invention shall be included in the protection scope of the present invention.

## Claims

1. A method for configuring an uplink positioning reference signal, performed by a location management function (LMF) network element, comprising:
sending a first message to a first network device;
wherein the first message comprises an uplink positioning reference signal configuration, and the first message is configured to request the first network device to reserve the uplink positioning reference signal configuration.

2. The method according to claim 1, wherein the uplink positioning reference signal configuration is configured to configure the uplink positioning reference signal for a terminal through a second network device.

3. The method according to claim 2, wherein a first cell where the first network device is located is a neighboring cell of a second cell where the second network device is located, and there are more than one first network device; and the second cell is a serving cell of the terminal.

4. The method according to claim 1, wherein the first message comprises time information, and the time information indicates a period of time in which the first network device reserves the uplink positioning reference signal configuration.

5. The method according to claim 4, wherein the time information instructs the first network device to release the uplink positioning reference signal configuration when it is determined that a current moment is not within the period of time indicated by the time information.

6. The method according to claim 1, further comprising:
sending a second message to the first network device;
wherein the second message instructs the first network device to release the uplink positioning reference signal configuration.

7. The method according to any one of claims 1 to 6, further comprising:
receiving a third message sent by the first network device;
wherein the third message indicates whether the first network device successfully reserves the uplink positioning reference signal configuration.

8. The method according to claim 7, wherein when the third message indicates that the first network device does not reserve the uplink positioning reference signal configuration, the third message further carries a reason why the first network device does not reserve the uplink positioning reference signal configuration.

9. The method according to claim 2, further comprising:
acquiring the uplink positioning reference signal configuration through the second network device.

10. The method according to claim 2, further comprising:
sending information of the first network device to the second network device when it is determined that the first network device successfully reserves the uplink positioning reference signal configuration.

11. The method according to claim 10, wherein the information of the first network device comprises at least one of:
a cell identifier corresponding to the first network device;
a radio access network (RAN) area identifier corresponding to the first network device; or
a system message area identifier corresponding to the first network device.

12. The method according to claim 10, wherein sending the information of the first network device to the second network device when it is determined that the first network device successfully reserves the uplink positioning reference signal configuration comprises:
sending the information of the first network device to the second network device via a fourth message.

13. The method according to claim 10, wherein the second network device sends the information of the first network device to the terminal.

14. The method according to claims 1, 6, 7 and 12, wherein the first message, the second message, the third message or the fourth message is a new radio positioning protocol A (NRPPa) message, and the NRPPa message comprises at least one of:
a user equipment association new radio positioning protocol A (UE association NRPPa) message; or
a non-user equipment association new radio positioning protocol A (non-UE association NRPPa) message.

15. A method for configuring an uplink positioning reference signal, performed by a first network device, comprising:
receiving a first message sent by a location management function (LMF) network element;
wherein the first message comprises an uplink positioning reference signal configuration, and the first message is configured to request the first network device to reserve the uplink positioning reference signal configuration.

16. The method according to claim 15, wherein the uplink positioning reference signal configuration is configured to configure the uplink positioning reference signal for a terminal through a second network device.

17. The method according to claim 16, wherein a first cell where the first network device is located is a neighboring cell of a second cell where the second network device is located, and there are more than one first network device; and the second cell is a serving cell of the terminal.

18. The method according to claim 15, wherein the first message comprises time information, and the time information indicates a period of time in which the first network device reserves the uplink positioning reference signal configuration.

19. The method according to claim 18, further comprising:
releasing the uplink positioning reference signal configuration when the first network device determines that a current moment is not within the period of time indicated by the time information.

20. The method according to claim 15, further comprising:
receiving a second message sent by the LMF network element;
wherein the second message instructs the first network device to release the uplink positioning reference signal configuration.

21. The method according to any one of claims 15 to 20, further comprising:
sending a third message to the LMF network element;
wherein the third message indicates whether the first network device successfully reserves the uplink positioning reference signal configuration.

22. The method according to claim 21, wherein when the third message indicates that the first network device does not reserve the uplink positioning reference signal configuration, the third message further carries a reason why the first network device does not reserve the uplink positioning reference signal configuration.

23. The method according to claim 16, wherein the uplink positioning reference signal configuration is acquired by the LMF network element through the second network device.

24. The method according to claim 16, wherein the LMF network element is configured to send information of the first network device to the second network device when it is determined that the first network device successfully reserves the uplink positioning reference signal configuration.

25. The method according to claim 24, wherein the information of the first network device comprises at least one of:
a cell identifier corresponding to the first network device;
a radio access network (RAN) area identifier corresponding to the first network device; or
a system message area identifier corresponding to the first network device.

26. The method according to claim 24, wherein the LMF network element is configured to send the information of the first network device to the second network device via a fourth message.

27. The method according to claim 24, wherein the second network device is configured to send the information of the first network device to the terminal.

28. The method according to claims 15, 20, 21 and 26, wherein the first message, the second message, the third message or the fourth message is a new radio positioning protocol A (NRPPa) message, and the NRPPa message comprises at least one of:
a user equipment association new radio positioning protocol A (UE association NRPPa) message; or
a non-user equipment association new radio positioning protocol A (non-UE association NRPPa) message.

29. A method for configuring an uplink positioning reference signal, performed by a second network device, comprising:
receiving information of a first network device sent by a location management function (LMF) network element; and
sending the information of the first network device to a terminal;
wherein the first network device is a network device that reserves an uplink positioning reference signal configuration, and the uplink positioning reference signal configuration is configured to configure the uplink positioning reference signal for the terminal through the second network device.

30. The method according to claim 29, wherein the information of the first network device comprises at least one of:
a cell identifier corresponding to the first network device;
a radio access network (RAN) area identifier corresponding to the first network device; or
a system message area identifier corresponding to the first network device.

31. The method according to claim 30, wherein a first cell where the first network device is located is a neighboring cell of a second cell where the second network device is located, and there are more than one first network device; and the second cell is a serving cell of the terminal.

32. The method according to claim 37, further comprising:
sending the uplink positioning reference signal configuration to the LMF network element.

33. The method according to any one of claims 29 to 32, wherein receiving the information of the first network device sent by the LMF network element comprises:
receiving the information of the first network device sent by the LMF network element via a fourth message.

34. The method according to claim 33, wherein the fourth message is a new radio positioning protocol A (NRPPa) message, and the NRPPa message comprises at least one of:
a user equipment association new radio positioning protocol A (UE association NRPPa) message; or
a non-user equipment association new radio positioning protocol A (non-UE association NRPPa) message.

35. A method for configuring an uplink positioning reference signal, performed by a terminal, and comprising:
receiving information of a first network device sent by a second network device;
wherein the first network device is a network device that reserves an uplink positioning reference signal configuration, and the uplink positioning reference signal configuration is configured to configure the uplink positioning reference signal for the terminal through the second network device.

36. The method according to claim 35, wherein the information of the first network device comprises at least one of:
a cell identifier corresponding to the first network device;
a radio access network (RAN) area identifier corresponding to the first network device; or
a system message area identifier corresponding to the first network device.

37. The method according to claim 36, wherein a first cell where the first network device is located is a neighboring cell of a second cell where the second network device is located, and there are more than one first network device; and the second cell is a serving cell of the terminal.

38. The method according to claim 37, further comprising:
sending the uplink positioning reference signal to the first network device according to the uplink positioning reference signal configuration, when the terminal reselects and accesses the first cell.

39. A network device, comprising:
a processor;
a transceiver, connected to the processor; and
a memory, configured to store instructions executable by the processor;
wherein the processor is configured to load and execute the executable instructions to perform the method for configuring the uplink positioning reference signal according to any one of claims 1 to 14.

40. A network device, comprising:
a processor;
a transceiver, connected to the processor; and
a memory, configured to store instructions executable by the processor;
wherein the processor is configured to load and execute the executable instructions to perform the method for configuring the uplink positioning reference signal according to any one of claims 15 to 34.

41. A terminal, comprising:
a processor;
a transceiver, connected to the processor; and
a memory, configured to store instructions executable by the processor;
wherein the processor is configured to load and execute the executable instructions to perform the method for configuring the uplink positioning reference signal according to any one of claims 35 to 38.
